# EUROPÄISCHE PATENTSCHRIFT

(11) **EP 1 519 469 B1**
(45) Veröffentlichungstag und Bekanntmachung des Hinweises auf die Patenterteilung: **29.10.2008**
(21) Anmeldenummer: 04016617.5
(22) Anmeldetag: 15.07.2004
(51) Int. Cl.: H02K 3/50, H02K 11/04

(54) **Verbindungselement für eine elektrische Maschine**
Electrical connection element for electric machine
Organe de raccordement pour machine électrique

(30) Priorität: 26.09.2003 DE 10345060
(43) Veröffentlichungstag der Anmeldung: 30.03.2005
(73) Patentinhaber: ROBERT BOSCH GMBH, 70442 Stuttgart (DE)
(72) Erfinder: Braun, Gerhard, 72762 Reutlingen (DE)

(56) Entgegenhaltungen:
- EP-A1- 0 521 791
- WO-A-02/080335
- DE-A1- 2 136 170
- DE-A1- 3 604 980
- DE-A1- 3 610 340
- DE-B- 1 912 535
- DE-U1- 9 011 351
- JP-A- 57 186 943
- US-A- 4 922 395

## Beschreibung

### Stand der Technik

Die vorliegende Erfindung betrifft ein Verbindungselement für eine elektrische Maschine zur elektrischen Verbindung einer Wicklung mit einem Steuergerät der elektrischen Maschine.

Elektrische Maschinen sind aus dem Stand der Technik in unterschiedlichen Ausgestaltungen bekannt. Hierbei sind elektrische Maschinen bekannt, welche ein Steuergerät aufweisen, welches in die elektrische Maschine integriert ist. Hierzu sind elektrisch leitende Verbindungen zwischen dem Steuergerät und den Wicklungen der elektrischen Maschine notwendig. Bisher werden derartige Verbindungen direkt ausgeführt, wobei beispielsweise ein Ende einer Wicklung unmittelbar an dem Steuergerät befestigt wird. Aufgrund von herstellungsbedingten Toleranzen kann es hierbei jedoch dazu kommen, dass das Steuergerät derart mit der Wicklung verbunden werden kann, dass große Spannungen im Steuergerät vorhanden sind oder große Querkräfte auf die elektrische Verbindung wirken. Hierbei kann im Extremfall ein Defekt der elektrischen Maschine ausgelöst werden. Um dies jedoch zu verhindern, sind bei den bisherigen elektrischen Maschinen höchste Ansprüche hinsichtlich der Toleranzen zu erfüllen, wodurch die Herstellung der Einzelbauteile der elektrischen Maschine sehr teuer ist.

Mit der DE 1 912 535 A1 ist eine Kontaktvorrichtung zwischen den Feldspulen eines Elektromotors und dessen Kohlebürsten bekannt geworden. Dabei weist die Kontaktiervorrichtung eines starre Haube auf, die axial auf das Blechpaket des Elektromotors aufklemmbar ist.

### Vorteile der Erfindung

Ein Verbindungselement zur elektrischen Verbindung einer Wicklung einer elektrischen Maschine mit einem Steuergerät gemäß dem Patentanspruch 1 weist demgegenüber den Vorteil auf, dass es eine Verbindung zwischen dem Steuergerät und der Wicklung mit integriertem Toleranzausgleich bereitstellt. Hierzu umfasst das erfindungsgemäße Verbindungselement ein Kontaktbauteil mit drei Federbereichen, wobei jeweils ein Federbereich derart angeordnet ist, dass er senkrecht zur Radial- bzw. Axial- bzw. Umfangsrichtung der elektrischen Maschine ist. Dadurch kann ein Toleranzausgleich zwischen der elektrischen Maschine und dem Steuergerät in dreidimensionaler Weise bereitgestellt werden.

Die Unteransprüche zeigen bevorzugte Weiterbildungen der Erfindung.

Um einen verbesserten Kontakt zwischen dem Kontaktbauteil und der Wicklung bereitzustellen, weist das Kontaktbauteil vorzugsweise ein U-förmiges Endstück zur Verbindung mit der Wicklung auf.

Vorzugsweise ist das Kontaktbauteil mittels Schweißen oder mittels Löten oder mittels Crimpen mit der Wicklung der elektrischen Maschine verbunden. Hierbei wird besonders bevorzugt das Schweißen als Verbindungsart verwendet, da hierdurch ein niedriger Übergangswiderstand sichergestellt werden kann.

Um das Kontaktbauteil möglichst kostengünstig herstellen zu können, ist dieses vorzugsweise einstückig aus einem blechartigen Material hergestellt. Als Material wird dabei vorzugsweise Kupfer verwendet. Dadurch kann das Kontaktbauteil durch Ausstanzen und Umbiegen innerhalb weniger Arbeitsschritte hergestellt werden.

Gemäß einer bevorzugten Ausgestaltung der Erfindung ist das plattenartige Trägerelement aus Kunststoff hergestellt und das Kontaktbauteil ist als Einlegeteil ausgebildet und in das Trägerelement eingespritzt. Dadurch wird eine kostengünstige und sichere Verbindung zwischen Kontaktbauteil und Trägerelement erreicht.

Um eine einfache Verbindung zwischen dem Steuergerät und dem Verbindungselement bereitzustellen, weist das Kontaktbauteil eine als Steckverbindung ausgebildete Verbindung zum Steuergerät auf.

Vorzugsweise weist das plattenförmige Trägerelement des Verbindungselements eine mittige Öffnung auf. Dadurch kann einerseits das Gewicht des Verbindungselements reduziert werden und andererseits kann die Öffnung als Durchlass beispielsweise für ein Sensorelement o.Ä. verwendet werden.

Eine insbesondere in Axialrichtung der elektrischen Maschine flache Ausbildung des Verbindungselements ist möglich, wenn das plattenförmige Trägerelement mit dem Kontaktbauteil vorzugsweise am Übergangsbereich zwischen dem Federbereich, welcher im Wesentlichen senkrecht in Axialrichtung der elektrischen Maschine liegt, und der Steckverbindung verbunden ist. Dadurch ist dieser Federbereich im montierten Zustand parallel zum plattenförmigen Trägerelement angeordnet.

Weiterhin betrifft die Erfindung eine elektrische Maschine mit einem wie oben beschrieben Verbindungselement und ist besonders bevorzugt als dreiphasiger Motor ausgebildet. Eine derartige elektrische Maschine wird besonders bevorzugt bei einer elektrischen Servolenkung in Fahrzeugen verwendet. Bei dieser Verwendung können die Vorteile der vorliegenden Erfindung besonders gut eingesetzt werden, da hierbei einerseits ein kompakter und kostengünstiger Motor verwendet werden soll und andererseits eine höchste Ausfallsicherheit garantiert werden muss. Der erfindungsgemäße in das Verbindungselement integrierte Ausgleich von Toleranzen verhindert dabei das Einbringen von Spannungen in das Steuergerät und stellt eine sichere Kontaktierung zwischen dem Steuergerät und den Wicklungen des Motors bereit.

### Zeichnungen

Nachfolgend wird die vorliegende Erfindung unter Bezugnahme auf die begleitenden Zeichnungen beschrieben. In der Zeichnung ist:
- Figur 1: eine perspektivische Ansicht eines Kontaktbauteils eines Verbindungselements gemäß einem Ausführungsbeispiel der vorliegenden Erfindung im unverbauten Zustand und
- Figur 2: eine perspektivische Ansicht eines Verbindungselements, welches die in Figur 1 gezeigten Kontaktbauteile verwendet.

### Beschreibung des Ausführungsbeispiels

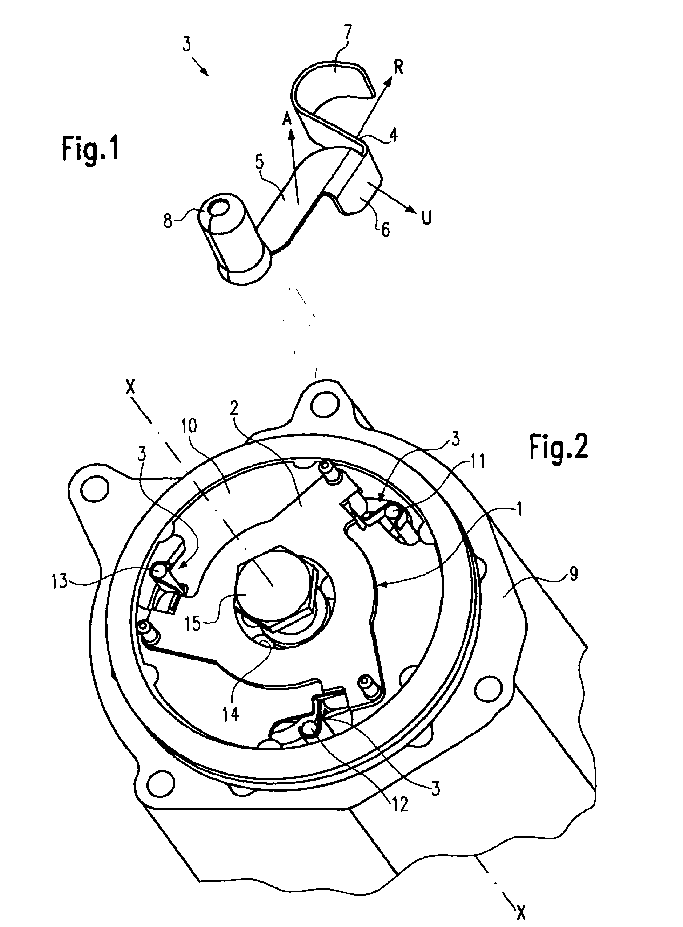

Nachfolgend wird unter Bezugnahme auf die Figuren 1 und 2 ein Ausführungsbeispiel eines Verbindungselements 1 gemäß der vorliegenden Erfindung beschrieben.

Wie aus Figur 2 ersichtlich ist, umfasst der erfindungsgemäße Verbindungselement 1 ein Trägerelement 2, welches plattenförmig ausgebildet ist, und drei Kontaktbauteile 3, welche jeweils gleich aufgebaut sind. Das Kontaktbauteil 3 ist in Figur 1 näher dargestellt. Wie aus Figur 1 ersichtlich, ist das Kontaktbauteil ein aus einem Blech mittels Umformen gebildetes Bauteil, welches einen ersten Federbereich 4, einen zweiten Federbereich 5 und einen dritten Federbereich 6 aufweist. Unmittelbar an den ersten Federbereich 4 schließt sich ein U-förmiges Endstück 7 an. Am entgegengesetzten Ende schließt sich an den zweiten Federbereich 5 ein Steckkontakt 8 an.

Das erfindungsgemäße Verbindungselement 1 stellt eine elektrisch leitende Verbindung zwischen Wicklungen 11, 12, 13 einer elektrischen Maschine und einem Steuergerät (nicht dargestellt) bereit. Figur 2 zeigt den montierten Zustand des Verbindungselements 1 auf einem elektrischen Motor. Der elektrische Motor umfasst ein Motorgehäuse 9 und einen Motordeckel 10. Durch den Motordeckel 10 ragen die Wicklungen 11, 12, 13 des dreiphasigen Motors in Axialrichtung X-X der elektrischen Maschine. Jeweils ein Kontaktbauteil 3 des Verbindungselements 1 ist mit einer Wicklung 11, 12, 13 verbunden. Hierzu umfasst das U-förmige Endstück 7 jeweils das durch den Motordeckel 10 ragende, zylinderförmige Ende jeder Wicklung 11, 12, 13. Die U-förmigen Endstücke 7 sind dabei mit den Wicklungsenden jeweils mittels Schweißen fest verbunden. Dadurch wird ein niedriger Übergangswiderstand erhalten.

Wie aus Figur 2 ersichtlich ist, sind die Kontaktbauteile 3 in das Trägerelement 2 aus Kunststoff integriert. Hierbei ragen die Steckkontakte 8 aus der vom Motor abgewandten Seite des Trägerelements 2 heraus und die Federbereiche und das U-förmige Endstück sind an der entgegengesetzten Seite des plattenförmigen Trägerelements 2 angeordnet. Das Trägerelement 2 weist weiterhin eine mittige Öffnung 14 auf, so dass sich einerseits dessen Gewicht reduziert und andererseits ein Durchgang für ein Sensorelement 15 geschaffen wird.

Das nicht gezeigte Steuergerät wird nun in Axialrichtung X-X des Motors auf das Verbindungselement aufgesetzt, wobei zwischen dem Steuergerät und dem Verbindungselement über die Steckkontakte 8 eine Steckverbindung hergestellt wird.

Das erfindungsgemäße Verbindungselement 1 kann nun durch die spezielle Ausgestaltung des Kontaktbauteils 3 mit drei Federbereichen einen Ausgleich von vorhandenen Herstellungstoleranzen bei der Montage des Verbindungselements 1 auf die Wicklungen 11, 12, 13 bereitstellen. Hierbei stellt der erste Federbereich 4 eine Federung in Radialrichtung R bereit, der zweite Federbereich 5 eine Federung in Axialrichtung A und der dritte Federbereich 6 eine Federung in Umfangsrichtung U der elektrischen Maschine bereit. Dies kann herstellungstechnisch durch einfaches Umformen eines ausgestanzten Blechs erreicht werden. Zur Herstellung des Verbindungselements 1 werden die Kontaktbauteile 3 einfach in die Spritzgussform eingelegt und anschließend das plattenartige Trägerelement 2 gespritzt, so dass die Kontaktbauteile am Übergangsbereich zwischen dem Steckkontakt 8 und dem zweiten Federbereich 5 fest mit dem Trägerelement 2 verbunden werden. Dadurch ist der zweite Federbereich 5 parallel zum Trägerelement 2 angeordnet. Beim Fügen der Steckverbindung kann sich der Federbereich 5 am Motordeckel der elektrischen Maschine abstützen.

Eine andere Möglichkeit zur Befestigung der Kontaktbauteile 3 am Trägerelement wäre, wenn der zweite Federbereich 5 vollständig in das Trägerelement 2 eingespritzt wäre. Dann würde eine Federung in Axialrichtung X-X der elektrischen Maschine über das Trägerelement 2 erfolgen.

Wie weiterhin aus Figur 2 ersichtlich ist, ist das Trägerelement 2 an seinem Außenumfang gewichtsoptimiert ausgebildet, indem das Trägerelement 2 nicht kreisringförmig ausgebildet ist, sondern zwischen den einzelnen Kontaktbauteilen drei großflächige Ausnehmungen aufweist.

Vorhandene Toleranzabweichungen zwischen den Bauteilen, insbesondere dem Steuergerät und den Wicklungen bzw. dem Gehäuse 9 und dem Motordeckel 10, können nun durch das in gewissen Bereichen bewegliche Verbindungselement 1 ausgeglichen werden. Da der Ausgleich über die Kontaktbauteile 3 erfolgt, werden somit weder im Trägerelement 2 noch im Steuergerät Spannungen erzeugt. Somit passt sich das Verbindungselement 1 an das aufmontierte Steuergerät an und gleicht eventuell vorhandene Fertigungstoleranzen über die federnden Kontaktbauteile 3 aus.

Aufgrund der in Figur 1 gezeigten optimierten Bauweise des Kontaktbauteils 3 weist das Verbindungselement 1 dabei minimale Abmessen in axialer Richtung A auf. Genauer, entsprechen die Abmessungen in axialer Richtung A der Breite des ersten und dritten Federbereichs bzw. des U-förmigen Endstücks. Da, wie in Figur 2 gezeigt, jedoch die Wicklungen 11, 12, 13 etwas aus dem Motordeckel 10 hervorstehen, sind die Breiten der Federbleche 4 und 6 derart gewählt, dass kein zusätzlicher axialer Bauraum zur Befestigung des Steuergeräts notwendig ist. Die Breite der Federbereiche wird dabei vorzugsweise derart gewählt, dass sie über die gesamte, aus dem Motordeckel 10 vorstehende Länge der Wicklungen 11, 12, 13 reichen. Dies kann eine sichere Kontaktierung gewährleisten, welche vorzugsweise mittels Schweißen hergestellt wird.

Somit kann das erfindungsgemäße Verbindungselement insbesondere bei einem elektrischen Antrieb für eine Servolenkung in einem Fahrzeug verwendet werden, da aufgrund der integrierten Toleranzausgleichung eine höchste Betriebssicherheit gewährleistet werden kann, welche bei Fahrzeuglenkungen notwendig ist. Weiterhin vergrößert das erfindungsgemäße Verbindungselement den elektrischen Antrieb in axialer Richtung nicht bzw. nur unwesentlich, so dass auch geringer Bauraum eingehalten werden kann.

## Patentansprüche

1. Verbindungselement zur elektrischen Verbindung einer Wicklung (11, 12, 13) einer elektrischen Maschine mit einem Steuergerät, umfassend ein plattenartiges Trägerelement (2), in das mindestens ein Kontaktbauteil (3) integriert ist, **dadurch gekennzeichnet, dass** jedes Kontaktbauteil (3) einen ersten Federbereich (4), einen zweiten Federbereich (5) und einen dritten Federbereich (6) aufweist, wobei der erste Federbereich (4) im Wesentlichen senkrecht zu einer Radialrichtung (R) der elektrischen Maschine angeordnet ist, so dass er eine Federung in Radialrichtung der elektrischen Maschine bereitstellt, der zweite Federbereich (5) im Wesentlichen senkrecht zur Axialrichtung (A) der elektrischen Maschine angeordnet ist, so dass er eine Federung in Axialrichtung der elektrischen Maschine bereitstellt und der dritte Federbereich (6) im Wesentlichen senkrecht zur Umfangsrichtung (U) der elektrischen Maschine angeordnet ist **so dass er** eine Federung in Umfangsrichtung der elektrischen Maschine bereitstellt, wobei das Kontaktbauteil (3) einerseits mit der elektrischen Wicklung (11,12,13) und andererseits mit dem Steuergerät verbindbar ist.

2. Verbindungselement nach Anspruch 1, **dadurch gekennzeichnet, dass** das Kontaktbauteil (3) ein U-förmiges Endstück (7) zur Verbindung mit der Wicklung (11, 12, 13) aufweist.

3. Verbindungselement nach einem der vorhergehenden Ansprüche, **dadurch gekennzeichnet, dass** das Kontaktbauteil (3) mit der Wicklung (11, 12, 13) der elektrischen Maschine mittels Schweißen oder mittels Löten oder mittels Crimpen verbunden ist.

4. Verbindungselement nach einem der vorhergehenden Ansprüche, **dadurch gekennzeichnet, dass** das Kontaktbauteil (3) einstückig aus einem blechartigen Material, insbesondere Kupfer, hergestellt ist.

5. Verbindungselement nach einem der vorhergehenden Ansprüche, **dadurch gekennzeichnet, dass** das plattenartige Trägerelement (2) aus Kunststoff hergestellt ist und dass das Kontaktbauteil (3) in das Trägerelement (2) eingespritzt ist.

6. Verbindungselement nach einem der vorhergehenden Ansprüche, **dadurch gekennzeichnet, dass** das mit dem Steuergerät in Verbindung stehende Ende des Kontaktbauteils (3) als Steckverbindung (8) ausgebildet ist.

7. Verbindungselement nach einem der vorhergehenden Ansprüche, **dadurch gekennzeichnet, dass** das Trägerelement (2) eine mittige Öffnung (14) aufweist, um einen Durchgang für ein Sensorelement (15) bereitzustellen.

8. Verbindungselement nach einem der vorhergehenden Ansprüche, **dadurch gekennzeichnet, dass** das Trägerelement (2) mit dem Kontaktbauteil (3) am Übergangsbereich zwischen dem zweiten Federbereich (5) und der Steckverbindung (8) befestigt ist.

9. Elektrische Maschine, umfassend ein Verbindungselement (1) nach einem der vorhergehenden Ansprüche.

10. Elektrische Maschine nach Anspruch 9, **dadurch gekennzeichnet, dass** die elektrische Maschine als dreiphasiger Motor für eine Servolenkung ausgebildet ist.

## Claims

1. Connection element for electrically connecting a winding (11, 12, 13) of an electrical machine to a control device, comprising a plate-like support element (2) in which at least one contact component (3) is integrated, **characterized in that** each contact component (3) has a first spring region (4), a second spring region (5) and a third spring region (6), with the first spring region (4) being arranged substantially perpendicular to a radial direction (R) of the electrical machine so that it provides cushioning in the radial direction of the electrical machine, the second spring region (5) being arranged substantially perpendicular to the axial direction (A) of the electrical machine so that it provides cushioning in the axial direction of the electrical machine, and the third spring region (6) being arranged substantially perpendicular to the circumferential direction (U) of the electrical machine so that it provides cushioning in the circumferential direction of the electrical machine, it being possible to connect the contact component (3) to the electrical winding (11, 12, 13) at one end and to the control device at the other end.

2. Connection element according to Claim 1, **characterized in that** the contact component (3) has a U-shaped end piece (7) for connection to the winding (11, 12, 13).

3. Connection element according to either of the preceding claims, **characterized in that** the contact component (3) is connected to the winding (11, 12, 13) of the electrical machine by means of welding or by means of soldering or by means of crimping.

4. Connection element according to one of the preceding claims, **characterized in that** the contact component (3) is integrally produced from a sheet-like material, in particular copper.

5. Connection element according to one of the preceding claims, **characterized in that** the plate-like support element (2) is produced from plastic, and **in that** the contact component (3) is injection-moulded into the support element (2).

6. Connection element according to one of the preceding claims, **characterized in that that** end of the contact component (3) which is connected to the control device is in the form of a plug connection (8).

7. Connection element according to one of the preceding claims, **characterized in that** the support element (2) has a central opening (14) in order to provide a passage for a sensor element (15).

8. Connection element according to one of the preceding claims, **characterized in that** the support element (2) is fixed to the contact component (3) at the transition region between the second spring region (5) and the plug connection (8).

9. Electrical machine comprising a connection element (1) according to one of the preceding claims.

10. Electrical machine according to Claim 9, **characterized in that** the electrical machine is in the form of a three-phase motor for a power steering system.

## Revendications

1. Elément de liaison pour relier électriquement un enroulement (11, 12, 13) d'une machine électrique à un appareil de commande, comportant un élément de support (2) en forme de plaque intégrant au moins un composant de contact (3),
**caractérisé en ce que**
chaque composant de contact (3) présente une première zone élastique (4), une seconde zone élastique (5) et une troisième zone élastique (6),
la première zone élastique (4) étant disposée pratiquement perpendiculairement à la direction radiale (R) de la machine électrique pour assurer une suspension dans la direction radiale de la machine électrique,
la seconde zone élastique (5) étant disposée pratiquement perpendiculairement à la direction axiale (A) de la machine électrique de façon à assurer une suspension dans la direction axiale de la machine électrique, et
la troisième zone élastique (6) est montée pratiquement perpendiculairement à la direction périphérique (U) de la machine électrique de façon à assurer une suspension dans la direction périphérique de la machine électrique,
la pièce de contact (3) étant reliée d'un côté à l'enroulement électrique (11, 12, 13) et l'autre côté à l'appareil de commande.

2. Elément de liaison selon la revendication 1,
**caractérisé en ce que**
la pièce de contact (3) comporte une pièce d'extrémité (7) en forme de (U) pour être reliée à l'enroulement (11,12, 13).

3. Elément de liaison selon les revendications précédentes,
**caractérisé en ce que**
la pièce de contact (3) est reliée à l'enroulement (11, 12, 13) de la machine électrique par soudage, brasage ou serrage.

4. Elément de liaison selon les revendications précédentes,
**caractérisé en ce que**
la pièce de contact (3) est fabriquée en un seul morceau en une matière telle qu'une tôle notamment une tôle de cuivre.

5. Elément de liaison selon les revendications précédentes,
**caractérisé en ce que**
l'élément de support en forme de plaque (2) est fabriqué en matière plastique et la pièce de contact (3) est surmoulée dans l'élément de support (2).

6. Elément de liaison selon les revendications précédentes,
**caractérisé en ce que**
l'extrémité de la pièce de contact (3) en liaison avec l'appareil de commande est en forme de broche (8).

7. Elément de liaison selon les revendications précédentes,
**caractérisé en ce que**
l'élément de support (2) présente une ouverture centrale (14) pour permettre le passage vers un élément de capteur (15).

8. Elément de liaison selon les revendications précédentes,
**caractérisé en ce que**
l'élément de support (2) est fixé à la pièce de contact (3) dans la zone transitoire entre la seconde zone élastique (5) et la liaison par enfichage (8).

9. Machine électrique comportant un élément de liaison (1) selon les revendications précédentes.

10. Machine électrique selon la revendication 9,
**caractérisée en ce que**
la machine électrique est un moteur triphasé pour une direction assistée.
